# EUROPEAN PATENT SPECIFICATION

(11) **EP 4 161 755 B1**
(45) Date of publication and mention of the grant of the patent: **23.07.2025**
(21) Application number: 21812450.1
(22) Date of filing: 17.05.2021
(51) Int. Cl.: B29C 45/76, B29C 49/78, B29C 49/06, B29C 49/42, B29C 49/48

(54) **METHODS AND APPARATUS FOR MOLDING CONTROL**
VERFAHREN UND VORRICHTUNG ZUR FORMSTEUERUNG
PROCÉDÉS ET APPAREIL POUR LA COMMANDE DE MOULAGE

(30) Priority: 29.05.2020 US 202063031654 P
(43) Date of publication of application: 12.04.2023
(73) Proprietor: Husky Injection Molding Systems Ltd., Bolton, ON L7E 5S5 (CA)
(72) Inventor: NIEWELS, Joachim Johannes, Thornton, Ontario L0L 2N0 (CA); YANKOV, Peter, Bolton, Ontario L7E 2X1 (CA); ULEMEK, Adam Christopher, Mississauga, Ontario L5E 2X8 (CA); KMOCH, Sven, 54518 Platten (DE); DEUTSH, Menny, Thornhill, Ontario L3T 4W2 (CA); WANG, Zhiming, Woodbridge, Ontario L4H 1K6 (CA); KARNER, Richard John, Holland Landing, Ontario L9N 1C2 (CA); KERSHAW, Michael David, Brampton, Ontario L6V 4H2 (CA); SHEN, Lixin, Mississauga, Ontario L5V 3A2 (CA)
(74) Representative: HGF
(86) International application number: PCT/CA2021/050671
(87) International publication number: WO 2021/237339

(56) References cited:
- EP-A1- 2 052 842
- WO-A1-2020/037342
- WO-A1-2020/041889
- DE-A1- 102016 103 756
- US-A- 5 461 570
- US-A- 5 468 443
- US-A1- 2005 194 705

## Description

### FIELD

This relates to plastic molding, and more particularly, to control of flexible molding systems.

### BACKGROUND

Many plastic molding systems are optimised for production of products in very large quantities. Such systems typically involve complex, multi-cavity molds of fixed configuration for production of multiple identical parts simultaneously in each molding cycle.

Successful operation of such processes typically requires extensive custom tooling. For example, multi-cavity molds are custom designed and fabricated for each unique type of part to be produced. Complex melt control mechanisms are required to melt and thermally control molding material, and deliver molten material to each cavity. Molding material is therefore flowed through a fixed conduit to a mold.

While these systems are capable of producing large volumes of products at relatively low per-unit costs, they tend to be less cost-effective for smaller-quantity runs of products, and provide very little flexibility, as product changes generally cannot be made without significant revision or replacement of tooling.

Systems capable of producing multiple types of products or capable of efficient configuration changes present control challenges.

US5468443, EP2052842, DE102016103756, US2005/194705 and WO2020/037342 each describes a system for transporting molded items from an injection molding machine. WO2020/041889 describes a plastic molding system comprising: dispensing, pre-shaping and shaping cells and a transport subsystem. US5461570 describes a computer control system for optimizing process parameters in an automated production line for producing contact lenses.

### SUMMARY

An example molding system for forming plastic articles comprises: a plurality of process stations each operable to receive an input unit and produce an output unit, the process stations comprising: at least one melt dispensing station for dispensing molten molding material; and a plurality of shaping stations each for forming molding material into a molded shape; wherein output units from the at least one melt dispensing station are input units for the shaping stations a transport system for selectively moving input and output units between ones of the process stations; a controller for each of the process stations, operating the respective process stations according to a plurality of operating conditions, the operating conditions defining the stations as ready to receive an input unit, performing a process on an input unit, or ready to release an output unit; a supervisory controller operable to track a current operating condition of each process station, define paths from ones of the process stations ready to release an output unit, and ones of the process stations ready to receive an input unit, and provide instructions for the transport system to move the input and output units along the paths.

In some embodiments, the plurality of shaping stations are primary shaping stations, and the molded shape is an intermediate molded shape and the process stations further comprise at least one secondary shaping station, wherein output units from the primary shaping stations are input units for the at least one secondary shaping station, the secondary shaping station operable to re-shape articles in the intermediate molded shape into a final molded shape.

In some embodiments, the plurality of shaping stations comprise injection molds.

In some embodiments, the plurality of primary shaping stations comprise injection molds and the plurality of secondary shaping stations comprise blow molds.

In some embodiments, the molding system is operable to concurrently produce plastic articles of a plurality of types.

In some embodiments, the operating conditions are associated with a state of a station state model.

In some embodiments, the supervisory controller is configured to assign an operating state to each of a plurality of types of plastic articles, according to a job state model.

In some embodiments, the supervisory controller is configured to cause the operating stations to transition between states of the station state model based on a transition between states of a job state model.

In some embodiments, each state model is associated with a production operating mode, and wherein the controller and the supervisory controller are configured with further state models for automated execution of additional operating modes.

In some embodiments, the additional operating modes comprise a tooling change mode.

In some embodiments, each state model is implemented according to a packaging machine language (PackML) standard.

In some embodiments, the system further comprises an enterprise control platform, the enterprise control platform operable to receive production instructions over the internet and to direct operation of the supervisory controller in accordance with the production instructions.

An example method of forming plastic articles comprises: operating a plurality of process stations comprising stations for dispensing molten molding material and stations for forming molding material into a molded shape, wherein the operating comprises providing operating status communications from a controller, the communications identifying respective ones of the stations as having produced an output part, and ones of the stations ready to receive an input part to be processed; tracking an operating condition of each one of the plurality of process stations based on the communications; defining a path for each output part to a station ready to receive the respective input part to be processed; and moving each part along its respective route.

In some embodiments, the plurality of shaping stations are primary shaping stations, and the molded shape is an intermediate molded shape and the process stations further comprise at least one secondary shaping station, wherein output units from the primary shaping stations are input units for the at least one secondary shaping station, the secondary shaping station operable to re-shape articles in the intermediate molded shape into a final molded shape.

In some embodiments, the plurality of shaping stations comprise injection molds.

In some embodiments, the method comprises concurrently producing plastic articles of a plurality of types.

In some embodiments, the method comprises tracking an operating state of each one of the plurality of process stations according to a station state model, wherein a set of possible operating conditions are associated with each state of the station state model.

In some embodiments, the method comprises tracking a production status of a plurality of types of plastic articles according to corresponding job state models.

In some embodiments, the method comprises causing a transition between states of the station state model based on a transition between states of a job state model.

In some embodiments, the state model is implemented according to a packaging machine language (PackML) standard.

An example method for use in molding articles comprises: moving each part of a plurality of parts along a respective selected one of a plurality of possible paths through a plurality of available process stations, wherein the process stations comprise dispensing stations and molding stations, and each of the possible paths comprises a dispensing station and molding station; the selected one of a plurality of possible paths selected by, at a controller: tracking an operating condition of each of the process stations; selecting ones of the process stations capable of receiving a part for processing; identifying ones of the plurality of parts capable of processing at the selected process stations; assigning ones of the parts to ones of the process stations.

In some embodiments, the controller is a supervisory controller and wherein the tracking comprises receiving reports from station controllers associated with the process stations.

In some embodiments, moving each part comprises moving along a track.

In some embodiments, the plurality of possible paths are for production of molded articles of a plurality of different types.

In some embodiments, the assigning is based on allocation rules defining proportional allocation of the process stations to the types of molded articles.

In some embodiments, the allocation rules define production targets of the types of molded articles.

In some embodiments, ones of the process units are part of multiple the possible paths.

In some embodiments, the method comprises tracking cumulative production of each one of the plurality of different types of articles.

In some embodiments, identifying ones of the plurality of parts capable of processing at the selected process stations comprises identifying in-progress parts ready to be removed from process stations based on the scanning.

In some embodiments, identifying ones of the plurality of parts capable of processing at the selected process stations comprises identifying types of the in-progress parts ready to be removed.

In some embodiments, identifying ones of the plurality of parts capable of processing at the selected process stations comprises cross-referencing the selected process stations and definitions of the types of parts.

In some embodiments, the definitions of the types of parts comprise sets of process stations by which parts of each type are produced.

In some embodiments, the molding stations comprise injection molding stations and blow molding stations, and wherein each the process path includes a dispensing station, an injection molding station and a blow molding station.

An example molding system for forming plastic articles comprises: a plurality of process stations each operable to receive an input part and produce an output part, the process stations comprising: at least one melt dispensing station for dispensing molten molding material; and a plurality of shaping stations each for forming molding material into a molded shape; wherein output units from the at least one melt dispensing station are input units for the shaping stations a transport system for selectively moving input and output parts between ones of the process stations; a controller operable to: track an operating condition of each of the process stations; select ones of the process stations capable of receiving a part for processing; identify ones of the plurality of parts capable of processing at the selected process stations; assign ones of the parts to ones of the process stations.

In some embodiments, the transport system comprises a track.

In some embodiments, the input and output parts are movable along a plurality of possible paths for production of molded articles of a plurality of different types.

In some embodiments, the controller is operable to assign ones of the parts to ones of the process stations based on allocation rules defining proportional allocation of the process stations to the types of molded articles.

In some embodiments, the allocation rules define production quantity targets of the types of molded articles.

In some embodiments, ones of the process units are part of multiple the possible paths.

In some embodiments, the controller is operable to track cumulative production of each one of the plurality of different types of articles.

In some embodiments, the controller is operable to identify ones of the plurality of parts capable of processing at the selected process stations by cross-referencing the selected process stations and definitions of the types of parts.

In some embodiments, the definitions of the types of parts comprise sets of process stations by which parts of each type are produced.

In some embodiments, the molding stations comprise injection molding stations and blow molding stations, and wherein each the process path includes a dispensing station, an injection molding station and a blow molding station.

In some embodiments, the controller is a supervisory controller, wherein the supervisory controller is operable to track an operating condition of each of the process stations based on reports received from controllers associated with the process stations.

### BRIEF DESCRIPTION OF DRAWINGS

In the figures, which depict example embodiments:
FIG. 1 is a schematic diagram of a molding system;
FIG. 2 is a top plan view of the molding system of FIG. 1;
FIG. 3 is a side view of the molding system of FIG. 2;
FIG. 4 is a schematic view of the molding system of FIG. 1;
FIG. 5 is a schematic view of components of a control system of the molding system of FIG. 1;
FIG. 6 is a block diagram showing components of a supervisory control layer of the control system of FIG. 5;
FIG. 7 is a table depicting a data structure at the supervisory control layer of FIG. 6, for identifying possible product varieties;
FIG. 8 is a table depicting a data structure at the supervisory control layer of FIG. 6, for identifying possible station configurations;
FIG. 9 is a table depicting data at the supervisory control layer of FIG. 6, for tracking station status information;
FIG. 10 is a table depicting data at the supervisory control layer of FIG. 6, for station allocation;
FIG. 11 is a table depicting data at the supervisory control layer of FIG. 6, for tracking carriers;
FIG. 12 is a table depicting data at the supervisory control layer of FIG. 6, for tracking production;
FIG. 13 is a table depicting data at the supervisory control layer of FIG. 6, for tracking in-progress articles;
FIG. 14 is a schematic diagram depicting relationships between state models of the control system of FIG. 6;
FIG. 15 is a schematic diagram depicting states of a state model of the control system of FIG. 6;
FIG. 16 is a schematic diagram depicting a sequence of steps in a state of the state diagram of FIG 15; and
FIG. 17 is a flow chart depicting a process for routing parts through the system of FIG. 1.

### DETAILED DESCRIPTION

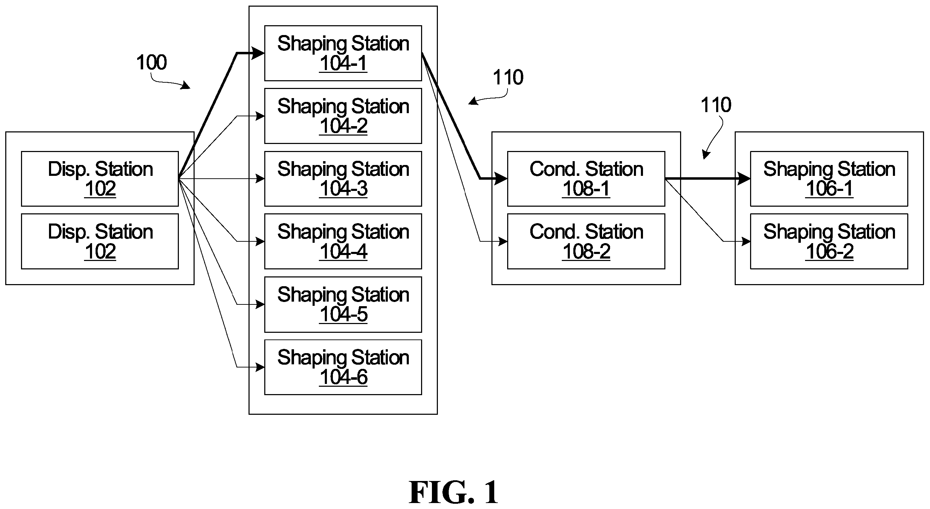

FIG. 1 schematically depicts an example plastic molding system 100 for producing plastic molded articles. As described in further detail below, plastic molding system 100 is capable of molding articles through a sequence of processing operations.

Plastic molding system 100 includes a plurality of process stations. The stations include groups of stations that are each operable to perform the same type of processing operation. Specifically, the depicted embodiment comprises a plurality of dispensing stations 102, a plurality of shaping stations 104, a plurality of secondary shaping stations 106, and a plurality of conditioning stations 108.

Each of the dispensing stations 102 is operable to perform a dispensing operation, namely, producing an output of molding material for use in subsequent operations. Each of the shaping stations 104 is operable to perform a primary shaping operation. For example, each station 104 may include an injection mold for performing an injection molding operation. Each one of shaping stations 106 is operable to perform a secondary shaping operation. For example, each one of shaping stations 106 include a blow mold for re-shaping an injection molded article into a finished shape.

Each station is operable to receive an input unit, and perform a process operation on the input unit to produce an output unit (collectively, "parts"). Input parts to dispensing stations 102 are empty vessels for receiving molding material. Output parts from dispensing stations 102 are vessels filled with molding material. Input parts to shaping stations 104 are filled vessels from dispensing stations 102 and output parts from shaping stations 104 are parts molded into an intermediate shape. Input parts to shaping stations 106 are the intermediate-shaped parts output from shaping stations 104, and output parts from shaping stations 106 are re-shaped into finished articles. Intermediate-shaped parts from shaping stations may be processed at conditioning stations 108 prior to re-shaping at shaping stations 106. Conditioning stations 108 may, for example, add heat to the intermediate-shaped parts, to create desired conditions for reshaping.

In an example, dispensing stations 102 comprise extruders for producing a flow of molten plastic molding material such as PET from a solid (e.g. pelletized) feedstock; shaping stations 104 are injection molding stations for producing blanks known as preforms to be subsequently re-shaped into containers such as beverage containers; and shaping stations 106 are blow molding stations for re-shaping the preforms.

In some embodiments, dispensing stations 102 are operable to dispense a range of possible molding materials. For example, the dispensing stations may output molding materials having different colours, compositions, or other properties. Dispensing stations 102 may be configured to output molding material in discrete quantities, which may be referred to as doses. Likewise, different shaping stations 104 and different shaping stations 106 may include molds of different sizes or shapes. Collectively, system 100 may be capable of concurrently producing molded articles of a number of different types, with each specific type of article corresponding to a combination of a type and quantity of molding material from a dispensing station 102, a shape and size of an injection molded article from a shaping station 104, and a shape and size of a finished article from a shaping station 106. Different types of articles would travel along different paths through system 100, with paths being defined by stations through which they pass.

Other embodiments may include more or fewer stations and carry out molding processes with more or fewer process steps. For example, some molding processes may include only a single molding step, or may include more than two molding steps. Alternatively or additionally, plastic molding system 100 may include stations for other operations. For example, plastic molding system 100 may include stations for post-molding operations such as container filling, labelling or capping.

The process stations of plastic molding system 100 are connected by a transport subsystem 110.

Transport subsystem 110 selectively connects stations to one another. Transport subsystem 110 is configurable to move molding material and in-progress or finished parts through any possible process paths through molding system 100.

As depicted, transport subsystem 110 includes a track defining a longitudinal axis of molding system 100.

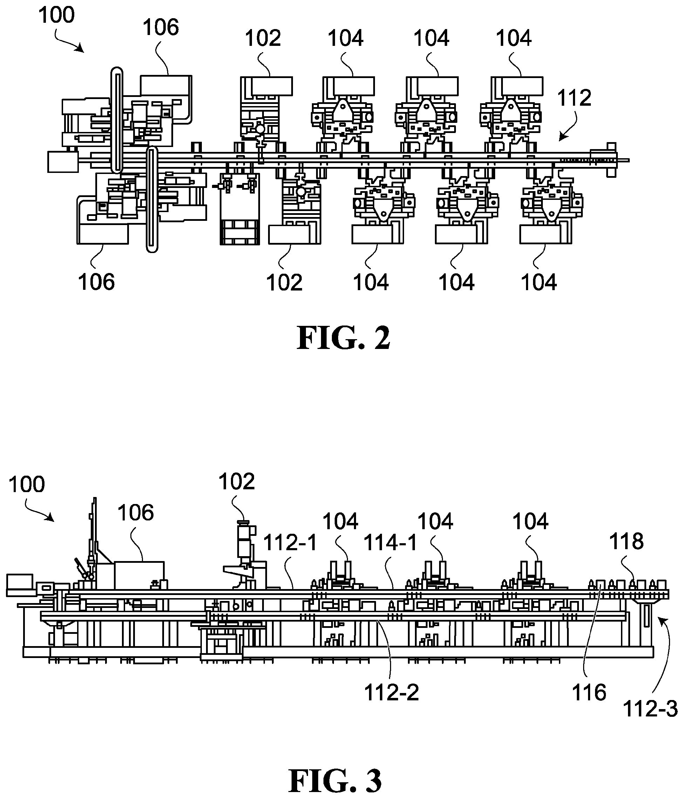

FIGS. 2, 3 and 4 depict an example physical layout of plastic molding system 100. As depicted, transport subsystem 110 of molding system 100 includes a track 112. In progress and completed molded articles are movable along track 112 between stations of molding system 100.

In the depicted embodiment, track 112 defines a loop. The loop is arranged vertically, with an upper track section 112-1 and a lower track section 112-3. Movable elevators 114 are positioned at ends of track 112 and are operable to shuttle parts between track sections 112-1, 112-2. Other embodiments may include tracks of different configurations. For example, some embodiments may include tracks defining a horizontal loop or tracks that do not define a loop, such as linear tracks.

The track 112 may comprise an array of electromagnets extending along its length. The track may be arranged in segments, each having a scale and an encoder output sensor extending along its length. The controller provides control voltages to the electromagnets of the track segments and is connected to the encoder output sensor.

Transport subsystem 110 includes carriers operable to hold parts for movement along track 112. In the depicted embodiment, the carriers include molding material carriers 116 and preform carriers 118.

Carriers 116, 118 are movable along the length of track 112 by selective operation of the electromagnets in the track. In addition, the encoder at each track segment is able to precisely detect the position of the carriers along the track. Accordingly, the position of each individual carrier 116, 118 may be monitored and a carrier 116, 118 may be accurately sent to any arbitrary position along track 112.

Track 112 and carriers 116, 118 may be those manufactured by Beckhoff Automation GmbH & Co. KG under the trademark XTS.

Molding material carriers 116 are operable to transport molding material to be used at shaping stations 104. Specifically, as depicted, at dispensing stations 102, molding material is melted and transferred in molten form to vessels 120, also referred to as material transport units.

Vessels 120 are configured to maintain the molding material in its molten configuration during transport. For example, vessels 120 may be insulated to limit loss of heat and may include active heating elements. The active heating elements may be externally powered and may have exposed electrical conducts to receive power from corresponding contacts along track 112. Such power transmission may occur continuously or only at discrete locations along track 112 or when the vessels are positioned at some of the process stations.

Molding material carriers 116 are designed to selectively receive and retain (e.g. interlock with) vessels 120.

Preform carriers 118 are designed to selectively receive and retain in-progress parts for transport to subsequent stations. Specifically, as depicted, molten molding material is molded into an intermediate shape at shaping stations 104. The preform carriers are shaped correspondingly to the intermediate shape. A plurality of intermediate shapes may be possible and the preform carriers may be configured to accommodate all of the possible intermediate shapes. In an example, the intermediate shapes are preforms for being formed in a secondary shaping operation into a bottle or other container. Possible intermediate shapes may correspond to final bottle specifications, such as physical size and shape, wall thickness or the like.

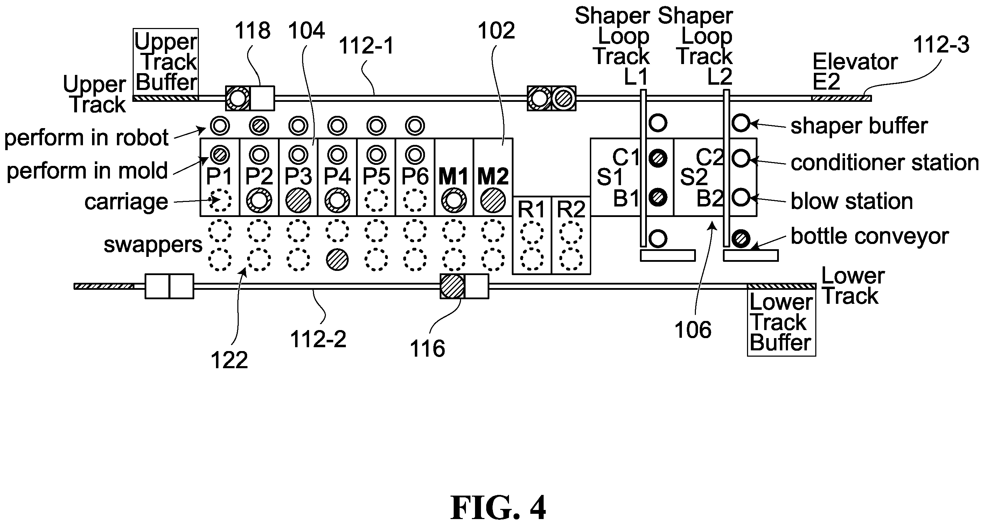

As schematically depicted in FIG. 4, transport subsystem 110 may further include transfer devices for moving parts between individual stations and track 112. For example, a set of robotic swappers 122 is positioned proximate shaping stations 104 for moving vessels 120 onto and off of track section 112-1. Each swapper 122 is operable to simultaneously handle up to two vessels 120 in respective nests. A vessel 120 that is filled with molding material may be picked up from track 112 in a first nest. A vessel 120 that has been voided of molding material may be picked up from a shaping station 104 in a second nest. The vessels 120 may then be interchanged. That is, the filled vessel may be placed in shaping station 104 and the voided vessel may be placed on track 112.

A second set of robotic swappers 124 is positioned proximate shaping stations 106 for transferring parts that have been formed into an intermediate shape from shaping stations 10 to preform carriers 118 on track section 112-2. Robotic swappers 124 may be single-axis or multi-axis robotic arms with end effectors operable to selectively grasp an intermediate shape.

Details of a suitable example transport subsystem are disclosed in patent cooperation treaty application no. Patent Co-operation Treaty (PCT) application no. PCT/CA2019/051205.

In some embodiments, molding system 100 may be part of a larger production facility. In such embodiments, the production facility may include multiple instances of molding systems 100, which may or may not be configured identically to one another. The molding system 100 may be part of a facility housed in a single building at a single location, or across multiple buildings at multiple locations.

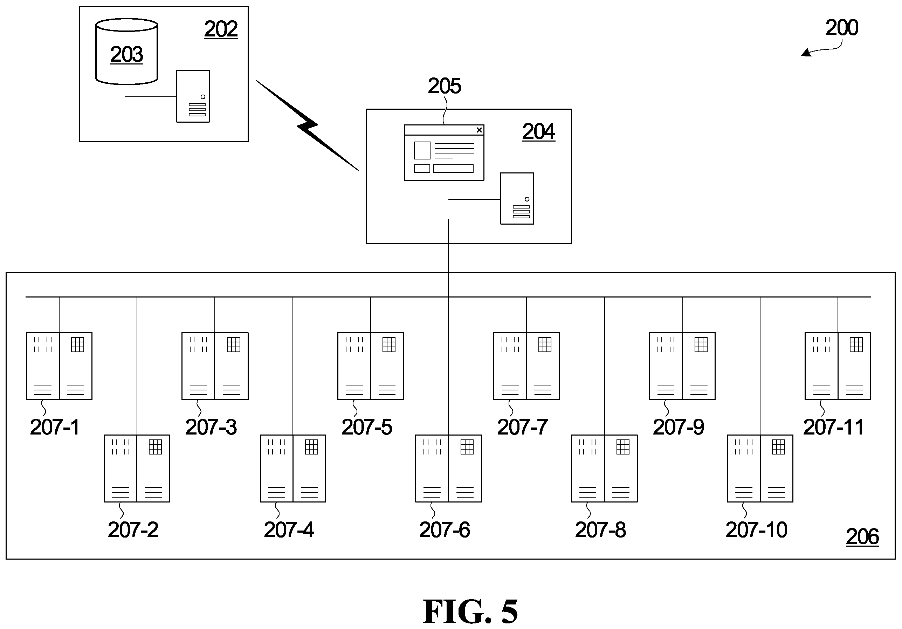

FIG. 5 is a block diagram depicting physical organization of an example control system 200 for operating a production facility including molding system 100. As shown, the control system 200 is configured in layers. The tiers include an enterprise platform layer 202, a supervisory control layer 204 and a station control layer 206.

The station control tier 206 includes a plurality of control modules, each of which generally controls operation of a single station of a molding system. For example, the depicted control modules 207-1, 207-2,...207-10 are responsible for controlling the dispensing stations 102, shaping stations 104 and shaping stations 106 of molding system 100. Station control tier 206 may further include control modules which control subsystems of molding system 100 that are not part of discrete stations. For example, the depicted control module 207-11 controls operation of transport subsystem 110.

Each control module may include one or more programmable logic controllers (PLCs) coupled to individual actuators and sensors within the station. For example, actuators controlled by a PLC at a dispensing station 102 may include actuators for extruder screw rotation; barrel heating; gate opening and closing, and the like. Actuators controlled by a PLC at a shaping station 104 may include mold opening and closing, core movement, mold material injection, gate opening and closing, and the like.

In the depicted embodiment, the PLCs are implemented as virtualized PLCs running on industrial computers. Suitable industrial computers are Beckhoff GmbH series C6930 PCs based on multi-core intel CPUs and Microsoft Windows 10 operating system. Virtualized PLCs may be implemented in the Beckhoff TwinCAT 3 PLC runtime.

As will be apparent to skilled persons, stations of molding system 100 may be operated in defined cycles. That is, upon commencing a production operation, the control module of a station may cause a defined sequence of operations to be performed. In general, the operations occurred in a fixed order and each operation takes place in a fixed period of time. The control modules of station layer 206 are configured to output messages comprising operational data. The operational data includes, at least, an identification of a process step being carried out, or an identification of an idle status if no process step is being carried out. As will be described in greater detail, identification of a process step likewise identifies or can be used to infer whether the station is capable of accepting a part for processing. Other operational data provided by the control module may include information for determining when a processing step will be concluded. For example, the data may include any of the time at which a current process step was initiated, the time elapsed since the step was started, or the time remaining in the step. The control modules may further be configured to report an operating mode and an operating state, such as a state defined in accordance with the Packaging Machine Language standard defined by International Society of Automation standard ISA-TR88 (hereinafter referred to as "PackML"). The station control modules are further configured to receive commands from the supervisory controller to transition into a new state and mode, to adjust operating parameters, and to apply any of a plurality of pre-defined parameters for processing of parts.

The control modules 207 of station layer 206 may additionally or alternatively include other control devices. For example, each control module may include a traditional (physical) PLC rather than a virtualized PLC. In some examples, terminals with user interfaces may be provided at stations to allow human operators to observe operational data, input instructions and the like. This may be referred to as a human machine interface (HMI). Hardware buttons or other controls may be connected to the control modules 207 and positioned in close proximity to the corresponding station. Such controls may allow for an operator to quickly and conveniently access a manual control mode

The control modules of station layer 206 may be interconnected with supervisory control layer 204 by way of one or more networks. The networks may include an EtherCAT Automation protocol (EAP interface) for PLC real-time communications, as well as an internet protocol (IP) or other suitable network, which may be used for non-real-time sensitive communication. The networks may include wired (e.g. Ethernet) and wireless (e.g. IEEE 802.11 Wi-Fi) connections.

Supervisory control layer 204 includes a supervisory controller 205. The supervisory controller interfaces with control modules of station layer 206 in order to direct and coordinate station operations, manage configuration of stations and to direct production of articles, e.g. to fulfill orders. Supervisory controller 205 may be implemented in a suitable industrial PC such as a Beckhoff GmbH CX2072 based on a multi-core intel CPU and Microsoft Windows 10 operating system, which may include a virtualized PLC implemented using the Beckhoff TwinCAT 3 PLC runtime.

The supervisory controller 205 is operable to receive and interpret messages, such as status messages, from each of the control modules 207 of station layer 206. In an example, sending of messages may be initiated by the control modules. For example, messages may be sent in response to initiation or completion of a processing step, or on a periodic basis. Alternatively or additionally, the supervisory controller 205 may periodically poll the controller 205 at each station within molding system 100 and interprets and forms operating instructions based on the responses.

The supervisory controller 205 also implements a human machine interface (HMI) or operator interface functionality, which may include a graphical user interface presented to the operator on one or more display panels, which may be touch sensitive. The HMI may also be equipped with hardware buttons or other manual controls for specific functions.

Supervisory control layer 204 is interconnected with enterprise platform layer 202 by way of a network. The network may be a local-area network (LAN) or a wide-area network such as the internet.

Enterprise platform layer 202 comprises one or more servers 203 and may serve as a data repository for operational data required for production of articles using molding system 100. For example, as described in greater detail below, each station is capable of numerous possible configurations and numerous types of articles can be produced using different combinations thereof. Master data structures listing such possibilities may be maintained as part of enterprise platform layer 202 and at any given time, only a subset of data may be copied to supervisory control layer 204 and station layer 206. For example, data may be stored in a master database at enterprise layer 202 and subsets of data may be written to memory at supervisory control layer 204 or at stations of station layer 206. The data copied may, for example, be only data relating to configurations that are possible with tooling physically available for installation.

Enterprise platform layer 202 also directs and monitors production by molding system 100. Specifically, orders defining production requirements may be input or received at enterprise platform layer 202. The production requirements may include, for example, types and quantities of articles required, and time at which the articles are required. Based on the production requirements, enterprise platform layer 202 can schedule production of specific types and quantities, and send instructions to supervisory control layer 204 to cause production according to the schedule. In some embodiments, enterprise platform layer 202 communicates with supervisory control layers 204 of multiple molding systems and can schedule and direct production by each of the molding systems.

In some embodiments, enterprise platform layer 202 is interconnected with supervisory control layers 204 of a plurality of different molding systems. In such embodiments, enterprise platform layer 202 may request configuration information for each molding system, to determine which systems are capable of producing articles of the desired types and in the desired quantities. Production scheduling may involve distributing production instructions based on the capabilities and current production scheduled.

In some embodiments, enterprise platform layer 202 provides an interface for outside users such as customers to input instructions and monitor production. For example, users may access enterprise platform layer 202 through the interface to place production orders, or to retrieve data on production progress, or the like.

The interface may be provided to by way of a wide-area network (WAN) such as the internet. For example, users may interact with enterprise platform layer 202 through a website or mobile application or by calls to one or more APIs forming part of facility layer 202.

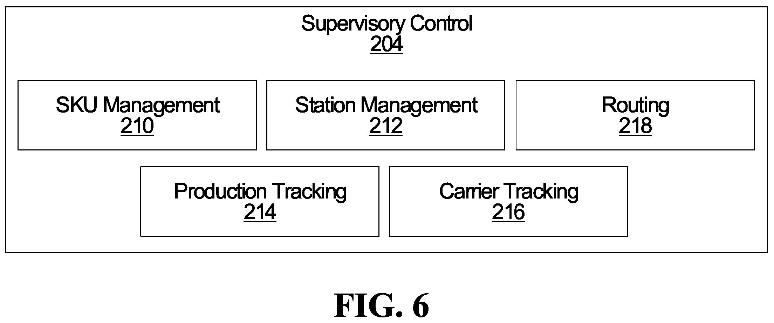

FIGS. 6-13 depict features of supervisory control layer 204 in greater detail.

FIG. 6 depicts example functional components of supervisory control layer 204. As shown, supervisory control layer 204 provides supervisory control and coordination within molding system 100. Supervisory control layer 204 includes an SKU management unit 210, a station management unit 212, a routing unit 218, a production tracking unit 214 and a carrier tracking unit 216.

SKU management unit 210 maintains a record of types of molded articles capable of being produced by molding system 100. Each unique molded article may be referred to as an SKU. As noted, each unique article type corresponds to a unique set of processing steps performed to produce the molded article. For example, each unique combination of a type and amount of molding material; intermediate shape and final shape defines a SKU.

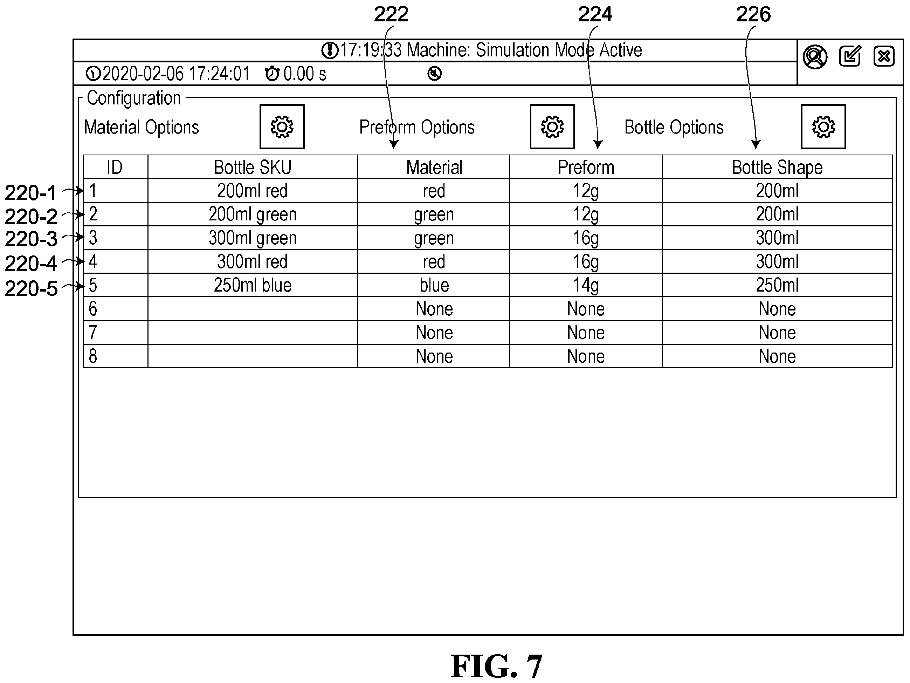

As shown in FIG. 7, SKU management unit maintains a data structure 220 defining possible SKU's. The data structure 220 has a record for each SKU and the records contain values in a "material type" field 222, an "intermediate shape" field 224, and a "final shape" 226.

As used herein, the term "data structure" refers to a set of data referenced to perform a described function. The described data structures may be contiguous, such as data stored in a table of a database, or data stored at a range of memory addresses. Alternatively or additionally, data described or shown in the figures as contiguous may distributed. For example, data depicted as being stored in a table may alternatively be stored in multiple tables at different locations. Likewise, data may be distributed across multiple memory locations or ranges of memory locations. Described data structures may be stored in a database and may be loaded into memory at runtime. Manipulations of the data structures described herein may be performed as manipulations of data in memory, manipulations of databases or their contents, or both.

A first record 220-1 of data structure 220 defines a SKU "200 ml red", indicating a red bottle of 200 ml capacity. The record has a value of "red" in the material type field 222, a value of "12g" in the intermediate shape field 224, indicating that the intermediate shape is that corresponding to a bottle preform 12 g in mass, and a value of "200 ml" in the final shape field 226, indicating that the finished shape is that corresponding to a bottle 200 ml in volume. Similarly, a second record 220-2 defines a SKU "200 ml green" and has the same values as record 220-1, except that the value in material type field 222 is "green". A third record 220-3 is for a SKU of "300 ml green" and has material type, intermediate shape and final shape values of green, 16 g and 300 ml, respectively. A fourth record 220-4 is for a SKU of "300 ml red" and has material type, intermediate shape and final shape values of red, 16 g and 300 ml, respectively. A fifth record 220-5 is for a SKU of "250 ml blue" and has material type, intermediate shape and final shape values of blue, 14 g and 250 ml, respectively.

In the depicted example, data structure 220 has a fixed size of eight records, three of which are unused. Data structure 220 may have fixed size in order to fit within memory constraints of a PLC. However, data structure 220 may have substantially any number of records, subject to capacity of the medium in which the data structure is stored, and in some embodiments may not have a defined size or maximum size. Optionally, the records in data structure 220 may be a subset of records from a corresponding master data structure stored as part of enterprise layer 202.

Referring again to FIG. 6, station management unit 212 tracks a set of possible configuration options for the stations of molding system 100, as well as the current configuration of each station and the operating status of each station.

As noted, each station of molding system 100 is capable of a plurality of configurations. For example, any dispensing station 102 may be configured to dispense any one of a plurality of molding materials. Possible molding materials may vary, for example, in colour, composition, dispensing conditions such as temperature, or the like. Similarly, any shaping station 104 or shaping station 106 may be configured with any of a plurality of different molds, for producing parts of different shapes, weights, markings, or the like. The configuration of a particular station is defined at least partly by the tooling installed at the station.

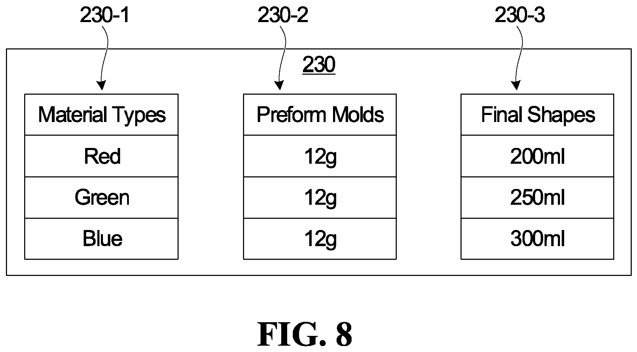

As shown in FIG. 8, station management unit 212 maintains a data structure 230 which defines configuration possibilities for each type of station. As depicted, data structure 230 includes a first set of options 230-1 listing possible molding material types that may be used at a given dispensing station. In the depicted example, three material types are shown, namely, green PET, red PET and blue PET. Other possible material characteristics that may be varied include material type, such as PET, PP and HDPE, polymer grades, viscosity, recycled polymer content and functional additives such as UV blockers or AA scavengers.

In some embodiments, material types defined in data structure 230 may correspond to detailed material specifications, recorded in another data structure (not shown). The material specifications may define, for example, mixing parameters such as base polymer and additive feed rates. The specifications may be maintained at supervisory control layer 204 and sent as processing instructions to dispensing stations 102.

Data structure 230 further includes a second set of options 230-2 listing mold options available for use in shapers 104. Each mold option corresponds to a specific mold design for producing a possible intermediate part shape. In some embodiments, shapes may be identified based on the mass of the resulting part. For example, as depicted, set 230-2 includes 12 g, 14 g and 16 g shapes. Additionally or alternatively, shapes may be identified based on geometric characteristics. Identifiers in set 230-2 may correspond to more detailed shape specifications maintained at enterprise layer 202. The specifications may be used to define parameters in molding operations.

Data structure 230 further includes a third set of options 230-3 listing mold options available for use in shapers 106. Each mold option corresponds to a specific mold design for producing a possible final part shape. In some embodiments, the final shapes may be containers such as bottles and the final shapes may be identified based on the volume of the resulting container. For example, as depicted, set 230-3 includes 200 ml, 250 ml and 300 ml options.

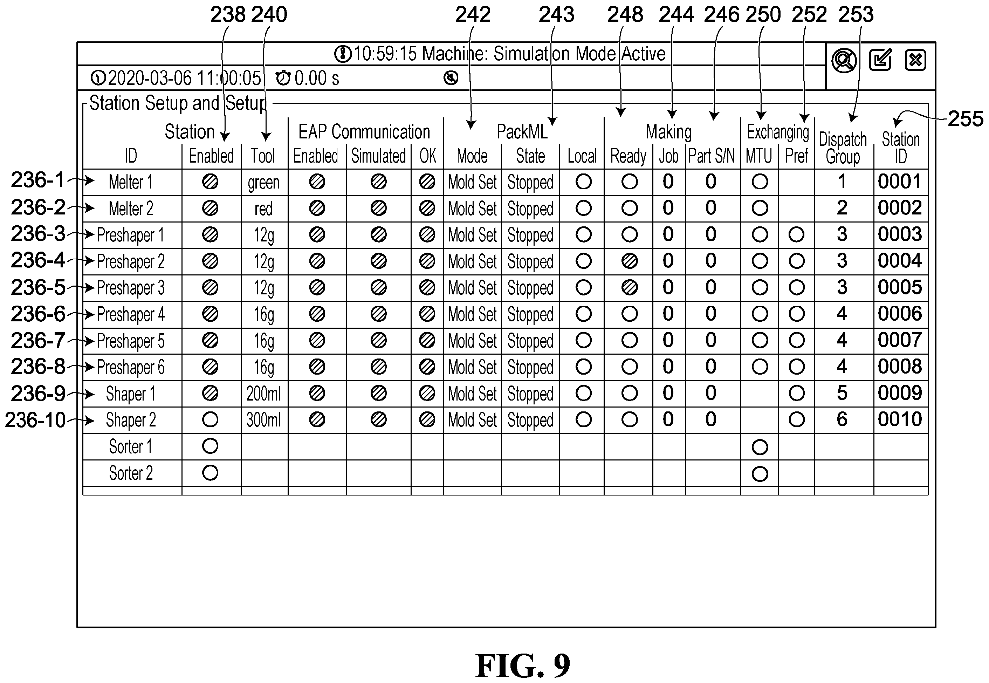

FIG. 9 depicts a further data structure 236 maintained by station management unit 212. Data structure 236 records current configuration and operating status information for each station of molding system 100. As noted, data depicted in data structure 236 may exist as a single contiguous data structure, or it may be distributed across a plurality of locations, such as a plurality of database tables or memory address ranges.

As depicted, data structure 236 includes 10 records corresponding to dispensing stations 102, shaping stations 104 and shaping stations 106 of molding system 100. Records 236-1 and 236-2 correspond to dispensing stations 102, records 236-3 through 236-8 correspond to shaping stations 104 and records 236-9 and 236-10 correspond to shaping stations 106.

Each record of data structure 236 includes an enabled field 238 containing a value indicating whether the corresponding station is enabled for operation, and a tooling field 240 indicating the tooling configuration currently installed at the corresponding station. Values in tooling field 240 correspond to values defined in data structure 230.

Operation of molding system 100 and of stations within molding system 100 may be controlled by modelling each station and the overall system as a state machine. Each state machine may be implemented within the controller of the respective device. That is, each station and the system as a whole may be regarded as operating in any one of a plurality of discrete states, each of which is associated with a specific defined sequence of operating steps. In the depicted example, states are defined in based on the Packaging Machine Language (PackML) standard defined by International Society of Automation standard ISA-TR88. As will be described in greater detail, each piece of equipment may have multiple modes, each of which has an associated state model.

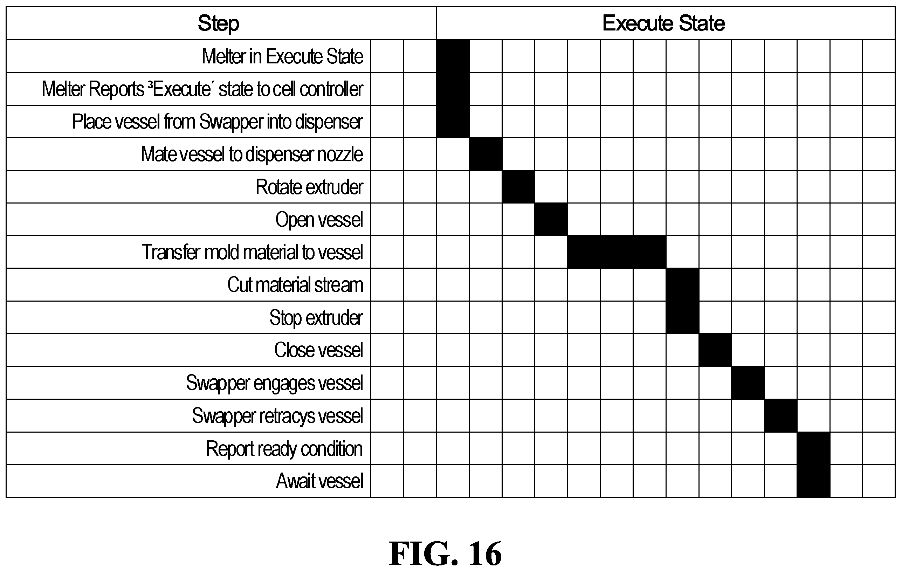

Each record of data structure 236 includes a mode field 242, indicating the mode in which the corresponding station is operating. Possible modes may include tooling change, in which tools are automatically removed from or installed to stations; mold set, in which tooling may be manually installed and specific maintenance operations may be conducted; manual, in which an operator manually initiates actions, primarily for troubleshooting; dry cycle, in which the station is operated without melt or in-progress parts; and production, in which parts are produced. Each record further comprises a state field 243, identifying the operating state of the station. Possible states are described in greater detail with reference to FIG. 16.

Each record of data structure 236 further includes a series of fields relating to current part production status of the corresponding station. Specifically, each record includes a job field 244 identifying a part to be produced or being produced at the station. In the depicted example, the part is identified by a pointer to a record of data structure 220 (FIG. 7). Alternatively, field 244 may include the SKU. Each record of data structure 236 further includes a serial number field 246, populated with the serial number assigned to the part, if present, and a completion status field 248, indicating whether the station is ready to act on a "make" instruction to commence processing of a part..

Each record of data structure 236 further includes two swapper status fields 250, 252, indicating status of swappers associated with the corresponding station. Swapper status field 250 indicates whether an associated swapper 122 is in the process of transferring a vessel 120 out of an associated dispensing station 102 or into an associated shaping station 104 and swapper status field indicates whether an associated swapper 124 is transferring a part in an intermediate shape out of an associated shaping station 104 or into an associated shaper station 106.

Station management unit 212 may associate stations of molding system 100 into groups of stations having like configuration. For example, all dispensing stations 102 configured to dispense a given molding material may be assigned to a common logical grouping. Likewise, all shapers 104 configured to produce parts of a given intermediate shape may be assigned to a common logical grouping. Such groupings may be referred to as dispatch groups.

As shown in FIG. 9, each record of data structure 236 includes a dispatch group field 253 identifying a group to which the corresponding station is assigned. For example, record 236-1 corresponds to a dispensing station configured for dispensing green molding material and is assigned to dispatch group 1. Record 236-2 corresponds to a dispensing station configured for dispensing red molding material and is assigned to dispatch group 2. Records 236-3, 236-4 and 236-5 correspond to shapers 104 configured to produce 12 g preform shapes and are assigned to dispatch group 3. Records 236-6, 236-7 and 236-8 correspond to shapers 104 configured to produce 16 g preform shapes and are assigned to dispatch group 4. Records 236-9 and 236-10 correspond to shapers 106 configured to produce 200 ml and 300 ml final shapes, respectively, and are assigned to dispatch groups 5 and 6, respectively.

Each record of data structure 236 further includes a station ID field 255, containing a unique identification number identifying the corresponding station.

Molding system 100 may be configured to produce multiple SKUs simultaneously. In such cases an allocation factors may be assigned to each SKU. The allocation factors may be considered to represent a portion of the available production resources assigned for production of each SKU. For each SKU, separate allocation factors may be defined for dispensing stations 102, shaping stations 104, and shaping stations 106.

In some examples, allocation factors may be integer values corresponding to physical stations. That is, a value of "1" may be assigned to indicate that a single station is dedicated to the SKU and a value of "2" may be assigned to indicate that two stations are dedicated to the SKU. For example, if two SKUs of different materials are being concurrently produced in a molding system having two dispensing stations, each SKU may be assigned a dispensing station allocation factor of "1", indicating that one of the two dispensing stations is assigned for production of that SKU.

In other examples, allocation factors may not correspond to assignment of a physical device solely to production of a single SKU. For example, if three SKUs are being concurrently produced, one of a first colour and two of a second colour, and two dispensing stations are available, a dispenser allocation factor of "1" could be assigned to the SKU of the first colour, while an allocation factor of "0.5" could be assigned to each of the SKUs of the second colour. Such allocation factors would indicate that the output of a dispensing station set up to dispense material of the second colour would be split between two SKUs. Thus, resources may be shared in production of multiple SKUs.

Allocation may be done based on dispatch groups, rather than individual stations. That is, the combined output of an entire dispatch group may be divided according to allocation factors of SKUs using that dispatch group, rather than assigning individual machines to SKUs.

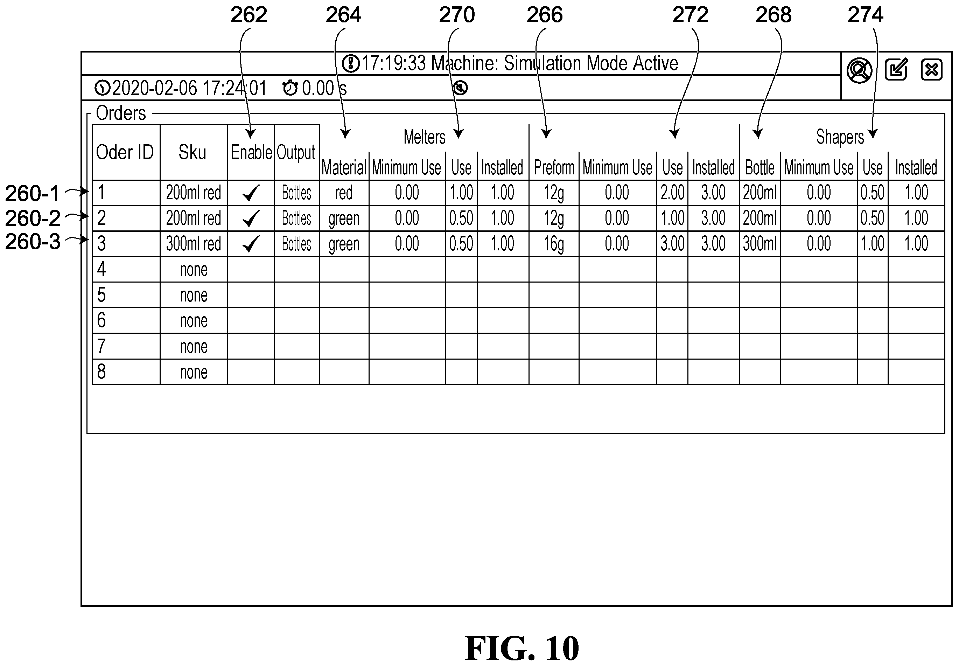

FIG. 10 depicts an example data structure 260 maintained by station management unit 212 to track allocation of stations to SKUs. FIG. 10 depicts example allocation factors for SKUs in molding system 100.

Data structure 260 comprises a plurality of records, each corresponding to an SKU. Record 260-1 corresponds to SKU "200 ml red", as defined in record 220-2 of data structure 220 (FIG. 7). Record 260-2 corresponds to SKU "200 ml green", as defined in record 220-2 of data structure 220, and record 260-3 corresponds to SKU "300 ml green", as defined in record 220-2 of data structure 220.

Each record has a first field 262 indicating whether the SKU is enabled, i.e., whether the SKU is being actively produced. Each record further includes fields 264, 266, 268 containing SKU specifications defined in the corresponding record of data structure 220, or references to the corresponding fields of data structure 220. Each record further includes allocation factor fields 270, 272, 274, respectively containing allocation factors for dispensing stations 102, shaping stations 104 and shaping stations 106.

In the depicted example the total of allocation factors in fields 270, 272 and 274 is the same as the number of active stations of each respective type. That is, records 260-1, 260-2, 260-3 have dispensing station allocation factors 270 of 1, 0.5 and 0.5 respectively, which corresponds to the two dispensing stations 102 available in molding system 100. Thus, the allocation factors may be interpreted as meaning that one dispensing station 102 is dedicated to record 260-1, i.e. "200 ml red", and another dispensing station is split between records 260-2 and 260-3, i.e. 200 ml and 300 ml green SKUs. Similarly, shaper 104 allocation factors in fields 272 are 2, 1 and 3, reflecting a total of six available shaping stations 104. However, as will become apparent, allocation factors need not be normalized in this manner and may simply define resource allocations proportionally.

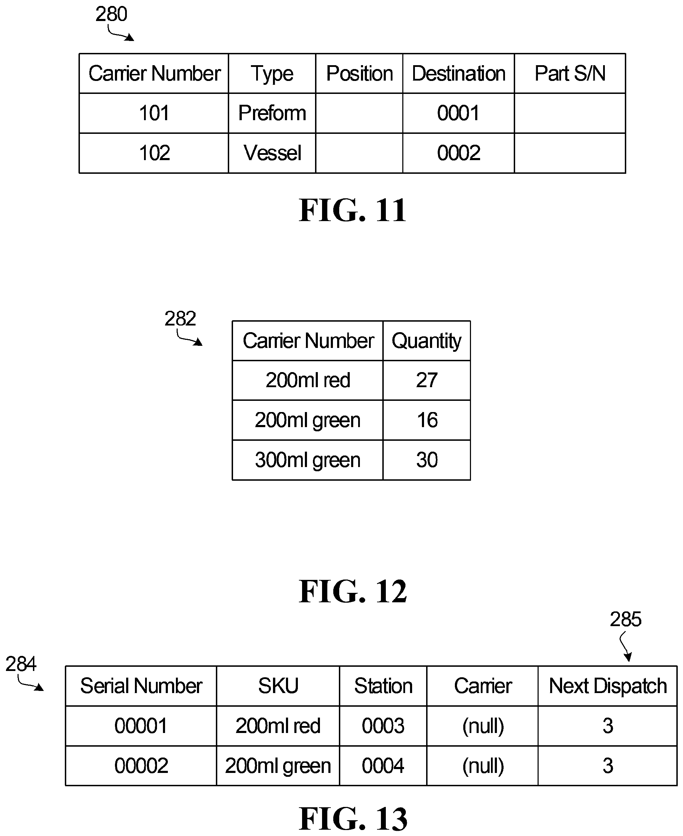

Referring again to FIG. 6, carrier tracking unit 216 maintains a data structure 280 containing a list of vessel carriers 116 and preform carriers 118 within molding system 100. As shown in FIG. 11, each carrier is represented by a record with fields identifying a unique identification value for the carrier (carrier ID), the type of carrier (i.e. vessel or preform), the position of the carrier along track 120, the destination of the carrier (if any), identified by a station ID, and a serial number of the part in the carrier (if any).

Production tracking unit 214 maintains data structures 282, 284, tracking completed and in-progress parts.

As shown in FIG. 12, data structure 282 contains a count of completed parts for each SKU. As shown in FIG. 13, data structure 284 contains a record for each in-progress part in molding system 100. Each record contains a serial number, a SKU, a station ID of the station the part is located at (if any), a carrier ID, and a value identifying the next destination of the part.

In the depicted example, the next destination of the part is defined as the dispatch group to which the part will travel after a current processing step is completed. As described above, the sequence of process steps for a particular SKU is defined in data structure 220 (FIG. 7). The dispatch group to which a part will travel is the dispatch group corresponding to the next station type in the sequence. For example, record 284-1 of data structure 284 is for a part with serial number 00001 of SKU "200 ml red". Part 00001 is located at a dispensing station 102 with station ID 0003. As defined in record 220-1 of data structure 220 (FIG. 7), 200 ml red articles require a 12 g intermediate (preform) shape. Accordingly, the next destination for part 00001 is a shaping station 104 configured for 12 g molding. As recorded in data structure 236 (FIG. 9) such stations are part of dispatch group 3. Accordingly, the next destination field identifies dispatch group 3.

Molding system 100 and components thereof may be controlled according to a state model. That is, state models may be defined which characterize operation of molding system 100 and its components. The models may be used to coordinate operation of stations. For example, the state models may be used to monitor and co-ordinate start-up and shut-down of stations, fault correction and the like. Likewise, the state models can be used to determine when individual stations are capable of receiving parts for processing.

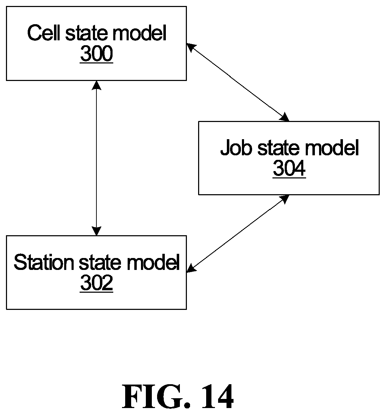

FIG. 14 shows state model components. As shown, a system state model 300 is defined to describe operation of the overall molding system 100, a station state model 302 is defined to describe operation of each station, and a job model 304 is defined to describe status of jobs at molding system 100. For example, a job model 304 is defined to describe production status of each SKU. A job model 304 may also be defined to described non-production functions, such as maintenance functions, automated tooling changes, and set-up functions.

The status of state models 300, 302, 304 are linked. Messages containing commands and status information may be exchanged, and state transitions in the system model 300, station models 302 and SKU models 304 may prompt state transitions in other models.

In some examples, state machines 300, 302, 304 are implemented based on the Packaging Machine Language (PackML) standard defined by International Society of Automation standard ISA-TR88.

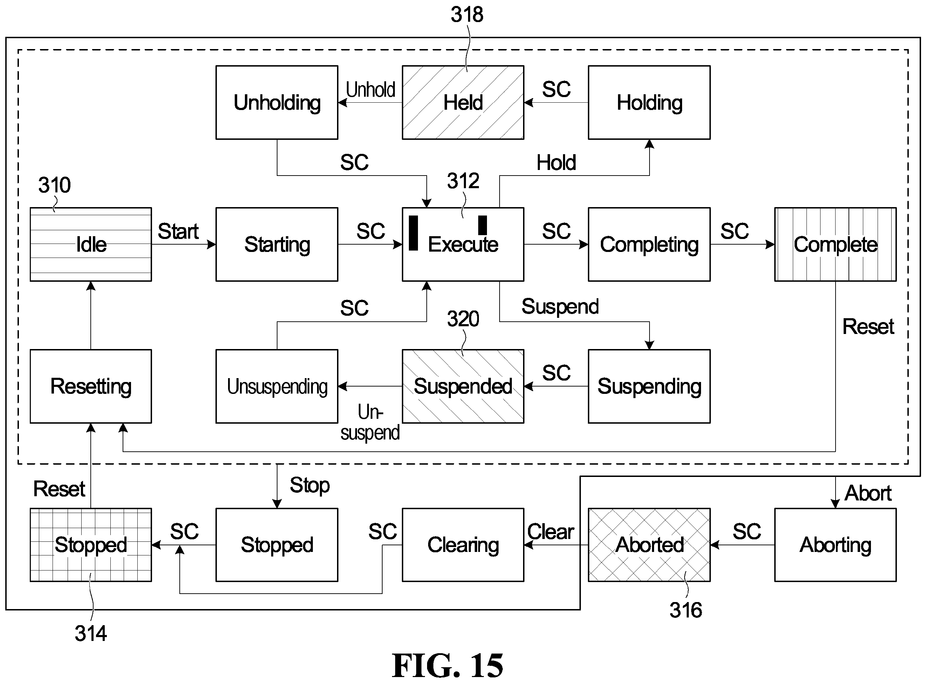

FIG. 15 depicts an example state diagram based on the PACKML standard ISA-TR88 and applicable to models 300, 302, 304. As depicted, 17 states are defined in each model. Each state includes a defined sequence of operations, which may repeat cyclically, and defined conditions for transitioning from one state to another.

As depicted, each state model includes a plurality of main states, as well as transitional states between the main states. The main states include an idle state 310, in which the machine is ready to produce parts and awaits an instruction to commence production, an executing state 312, in which parts are produced, a stopped state 314, in which parts are not produced, but the machine is not ready to produce parts, and suspended and held states 316, 318 in which production of parts is paused, awaiting instructions to resume.

As noted, each state of state models 300, 302, 304 has an associated fixed sequence of actions that is performed in the state. The sequence of actions defines a plurality of sub-states, with sub-states corresponding to completion of actions in the sequence.

FIG. 16 depicts a simplified example sequence of actions executed at a dispensing station 102 in executing state 312 of state model 302.

On entering execute state 312, a report is provided to a control device of supervisory control layer 204, confirming that the dispensing station 102 is in the execute state. The report indicates that the dispensing station is ready to execute a dispensing sequence upon receiving an empty vessel 120 and an instruction from supervisory controller 205. A vessel 120 is then placed into the dispensing station 102 from the adjacent swapper 122. The vessel 120 is positioned such that an inlet opening of the vessel mates to an outlet nozzle of the dispenser. The dispenser is activated to produce molding material, e.g. by rotating an extruder to melt the molding material, and an actuator opens the inlet of vessel 120. Molding material is transferred to the vessel 120, e.g. in a stream, and the stream is cut, and production of molding material is then stopped by stopping extruder rotation. The vessel inlet is then closed by an actuator. A report is then provided to a control device of supervisory control layer 204 indicating that a part is ready to be removed from the station. This may be referred to as a "part ready" sub-state. Swapper 122 then engages and retracts the vessel 120 out of dispensing station 102.

Once vessel 120 is retracted out of dispensing station 102, the dispensing station is ready to accept another vessel 120 to be filled. Accordingly, a report is provided to a control device of supervisory control layer 204 indicating that the dispensing station is ready for another vessel. This may be referred to as an "awaiting part" sub-state. The dispensing station remains in the awaiting part sub-state until another vessel 120 is received and an instruction is received from supervisory controller 205, at which point the sequence of actions is repeated.

Based on the current state of dispensing station 102, the sequence of steps being executed by the dispensing station is known to the control device of supervisory control layer 204. Moreover, as a result of status reporting by dispensing station 102, it is known when the dispensing station is in specific sub-states in which the dispensing station interacts with other components of molding system 100, namely, when a part is ready to be removed from the station and when the station is ready receive a new part.

Further details of operation of example dispensing stations 102 and shaping stations 104, 106 are described in PCT patent application no. X, the contents of which are incorporated herein by reference.

Execute states 312 in state models 302 for each of shaping stations 104, 106 likewise include reporting status in sub-states which call for interaction with other parts of molding system 100. In each execute state 312 the stations issue status reports that include at least an indication of a "part ready" sub-state at which a part is ready to be removed from the station, and an "awaiting part" sub-state at which the station is awaiting a further part for processing. The supervisory controller issues an instruction to the station defining at least a type of part (e.g., SKU) to be produced next and a subsequent destination to which the part is to be sent. Processing parameters may be included with the instruction or may be determined by the process station based on the type of part.

In the depicted embodiment, reports corresponding to sub-states of stations are sent by the stations immediately upon reaching the respective sub-states. That is, a report is sent in response to the first polling event after the sub-state is reached. Alternatively, reports may be sent in response to polling by the control device of the supervisory control layer 204.

Optionally, a plurality of modes may be defined, each mode having its own set of state models 300, 302, 304. The states available in each mode may be the same as those shown in FIG. 15 or a sub-set thereof. However, the sequence of steps associated with each state may vary from mode to mode. For example, modes may include production, maintenance and tooling change modes and steps performed in the "execute" state of each mode may differ.

States and modes of stations may be independent of one another. For example, during normal production operation of molding system 100, a subset including one or more stations may be transitioned into a hold state without interrupting operation of other stations. Likewise, one or more stations may be transitioned to a stopped state, then from a production mode to a tooling change mode without interrupting operation of any other stations.

Stations may also inherit states and modes from system state model 300 and job state models 304. For example, movement of molding system 100 from an idle state to a starting state, then an execute state of state model 300 may automatically cause each station of molding system 100 to likewise progress through the same states. In addition, movement of an job state model 304 from an execute state, to a complete state and then an idle state on completion of a production run may cause one or more stations to progress through the same states, if the station is not being used for production of any other SKUs.

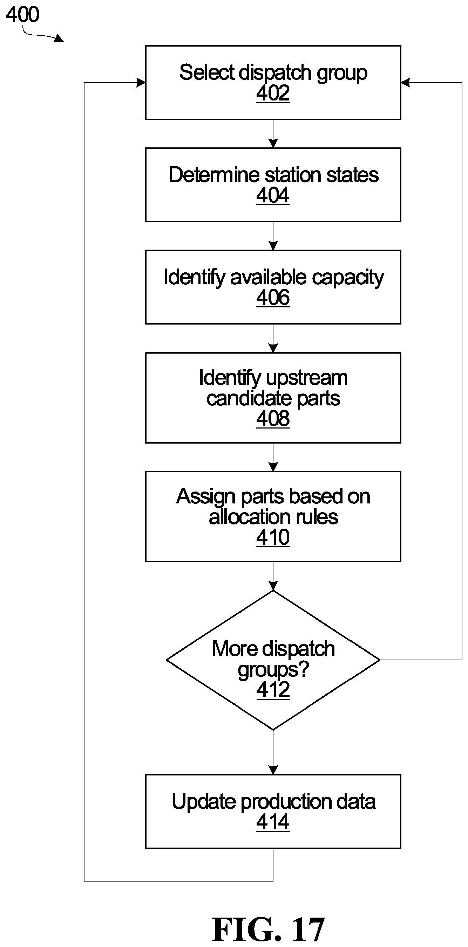

FIG. 17 depicts an example routing process 400 performed by the controller 205 of supervisory control layer 304 to define paths for parts though molding system 100.

Routing decisions are made by assigning parts to stations of each dispatch group in sequence. At block 402, a dispatch group is selected.

At block 404, controller 205 determines status of stations in the dispatch group based on reports from the control module 207 of each station. Data structure 236 (FIG. 9) is updated based on the responses received. Specifically, control modules 207 send reports to controller 205 when the corresponding station is reader to receive a "make" command to commence processing of a part. Values in completion status field 248 are updated to reflect stations which are ready begin processing. Likewise, control modules 207 send a "make done" message when processing of a part is completed, indicating that the part can be removed and the station is ready to receive a new part. Values in job field 244 are updated to reflect stations capable of receiving a new part for processing. As depicted, values of job field are set to 0. In the example of FIG. 9, records 236-4, 236-5 respectively indicate that shaping stations 104 with station IDs 0004 and 0005. Records 236-1, 236-6 and 236-9 respectively indicate that dispensing station 102 with station ID 0001, shaping station 104 with station ID 0006 and shaping station 106 with station ID 0009 are ready to receive a new part for processing.

At block 406, controller 205 determines the number of stations in the dispatch group that are ready to accept a part for processing. In the example of FIG. 9, dispensing station 102 with station ID 0001 belongs to dispatch group 1, shaping station 104 with station ID 0006 belongs to dispatch group 4 and shaping station 106 with station ID 0009 belongs to dispatch group 5. Accordingly, each of dispatch groups 1, 4 and 5 has an available capacity of one station.

At block 408, based on the "make done" reports received from station controllers 207, and corresponding values of serial number field 246, controller 205 identifies serial numbers of parts ready to be removed from stations.

The identified serial numbers are looked up in data structure 284 (FIG. 13) and those serial numbers which have a value in "next dispatch" field 285 corresponding to the selected dispatch group are selected as candidate parts to use the available capacity. In the example of FIG. 13, serial numbers 00001 and 00002 have value 5 in next dispatch field 285, corresponding to dispatch group 5. Accordingly, those parts are both candidates to use the one available station in dispatch group 5.

At block 410, the available capacity is allocated according to defined rules. In an example, if multiple candidate parts are available at the same time, controller 205 attempts to allocate capacity first based on priority of SKUs and second based on when the parts were ready, on a first-in-first-out basis. That is, if the candidate parts are of multiple different SKUs, allocation priority is based on allocation factors 270, 272, 274 defined in data structure 260 (FIG. 10). If there are multiple candidate parts of a single SKU, allocation may be determined based on the time the candidates were ready.

In an example, controller 205 may attempt to maintain cumulative production of SKUs in proportion to their allocation factors. As shown in FIG. 10, the 200 ml red and 200 ml green SKUs have allocation factors of 1 and 0.5, respectively. Thus, controller 205 may attempt to maintain cumulative production at a ratio of 2:1.

In the depicted example, the candidate part with serial number 00001 is of the 200 ml red SKU and the candidate part with serial number 00002 is of the 200 ml green SKU. Data structure 282 (FIG. 12) shows that cumulative production of the 200 ml red SKU is less than double that of the 200 ml green SKU. Accordingly, controller 205 would allocate the available capacity to the 200 ml green SKU and would instruct transport subsystem 110 to move the candidate part with serial number 00001 to the open shaping station 106.

At block 412, controller 205 determines if there are more dispatch groups and, if so, returns to block 408 to allocate the other groups. Dispatch group selection may proceed in random order, or in numerical order based on the number assigned to the dispatch group, or in an order according to the amount of available capacity, or according to the order of part processing, i.e. groups of dispensing stations 102, followed by groups of shaping stations 104, followed by groups of shaping stations 106.

In the depicted example, dispatch group 1, corresponding to a dispensing station 102, has available capacity. Because dispensing stations 102 do not receive in-progress parts from other stations, candidate parts need not be identified. Rather, controller 205 selects an idle vessel 120 and instructs transport subsystem 110 to move the selected vessel to the open dispensing station 102.

Although dispensing stations do not receive in-progress parts from other stations, allocation rules may still be applied, and allocation decisions made at dispensing stations influence utilization of subsequent stations. For example, if two SKUs of the same colour are concurrently in production, allocation factors may be applied as described above to determine which of the SKUs will be produced. Once an SKU has been assigned for production at an open dispensing station 102, a serial number is assigned and a corresponding row is created in data structure 282 (FIG. 12).

If no candidate parts are available to use the open capacity of a particular dispatch group, the open station or stations will remain idle until a candidate part is ready.

Once allocation and routing are complete for all dispatch groups with available capacity, at block 414, controller 205 updates the cumulative production data structure 282 to reflect newly-completed production.

In some embodiments, transit time of a new part may be taken into account in identifying a station's readiness to accept a new part. For example, a station may be identified as ready for a new part prior to removal of the previous part. A new part may then be supplied to the station just in time as the previous part is completed and removed. Because stations execute defined sequences of steps, and those steps generally have fixed duration, the time at which a station becomes ready for a new part may be reliably predicted. **In** another example, an indication that a station is ready to accept a new part for processing may initiate a countdown timer for sending a part to the station. the delay or lead time may be explicitly defined when the station indicates readiness to receive a part, or it may be preset.

**In** some embodiments, control system 200 can be extended to integrate process stations of additional types. Controllers may be provided for each additional station to control internal operation of the process station. The controllers may be interconnected with supervisory control layer 204. Supervisory controller 204 coordinates operation of the additional station with operation of dispensing stations 102 and shaping stations 104, 106. Supervisory controller 204 provides an interface for such integration. That is, a controller of an additional station can be integrated provided that it conforms to a station state model as described herein and is operable to send and status messages and receive instructions related to operating conditions. Examples of additional stations that may be integrated include article inspection, labelling and printing stations.

When introducing elements of the present invention or the embodiments thereof, the articles "a," "an," "the," and "said" are intended to mean that there are one or more of the elements. The terms "comprising," "including," and "having" are intended to be inclusive and mean that there may be additional elements other than the listed elements.

The term "comprise", including any variation thereof, is intended to be open-ended and means "include, but not limited to," unless otherwise specifically indicated to the contrary.

When a set of possibilities or list of items is given herein with an "or" before the last item, any one of the listed items or any suitable combination of two or more of the listed items may be selected and used.

The above described embodiments are intended to be illustrative only. Modifications are possible, such as modifications of form, arrangement of parts, details and order of operation. The examples detailed herein are not intended to be limiting of the invention. Rather, the invention is defined by the claims.

## Claims

1. A molding system (100) for forming plastic articles, the system comprising:
a plurality of process stations each operable to receive an input unit and produce an output unit, the process stations comprising:
at least one melt dispensing station (102) for dispensing molten molding material; and
a plurality of shaping stations each for forming molding material into a molded shape;
wherein output units from said at least one melt dispensing station are input units for said shaping stations
a transport system (100) for selectively moving input and output units between ones of said process stations;
**characterised in that** the molding system comprises:
a controller (207) for each of said process stations, operating the respective process stations according to a plurality of operating conditions, the operating conditions defining the stations as ready to receive an input unit, performing a process on an input unit, or ready to release an output unit;
a supervisory controller (204) operable to track a current operating condition of each process station, define paths from ones of said process stations ready to release an output unit, and ones of said process stations ready to receive an input unit, and provide instructions for said transport system (110) to move said input and output units along said paths.

2. The molding system of claim 1, wherein said plurality of shaping stations are primary shaping stations (104), and said molded shape is an intermediate molded shape and said process stations further comprise at least one secondary shaping station (106), wherein output units from said primary shaping stations are input units for said at least one secondary shaping station, said secondary shaping station operable to re-shape articles in said intermediate molded shape into a final molded shape.

3. The molding system of claim 2, wherein said plurality of primary shaping stations (104) comprise injection molds and said plurality of secondary shaping stations (106) comprise blow molds.

4. The molding system of claim 1 or claim 2, wherein said molding system is operable to concurrently produce plastic articles of a plurality of types.

5. The molding system of claim 4, wherein said operating conditions are associated with a state of a station state model (302).

6. The molding system of claim 5, wherein said supervisory controller (204) is configured to assign an operating state to each of a plurality of types of plastic articles, according to a job state model.

7. The molding system of claim 5, wherein said supervisory controller (204) is configured to cause said operating stations to transition between states of said station state model (302) based on a transition between states of a job state model (304).

8. The molding system of any one of claims 5 to 7, wherein each said state model (302, 304) is associated with a production operating mode, and wherein said controller (207) and said supervisory controller (204) are configured with further state models for automated execution of additional operating modes.

9. The molding system of any one of claims 1 to 8, further comprising an enterprise control platform, said enterprise control platform operable to receive production instructions over the internet and to direct operation of said supervisory controller in accordance with said production instructions.

10. A method of forming plastic articles, comprising:
operating a plurality of process stations comprising stations for dispensing molten molding material (102) and stations for forming molding material into a molded shape, wherein said operating comprises providing operating status communications from a controller (207), said communications identifying respective ones of said stations as having produced an output part, and ones of said stations ready to receive an input part to be processed;
tracking an operating condition of each one of said plurality of process stations based on said communications;
defining a path for each output part to a station ready to receive the respective input part to be processed; and
moving each part along its respective route.

11. The method of claim 10, wherein said plurality of shaping stations are primary shaping stations (104), and said molded shape is an intermediate molded shape and said process stations further comprise at least one secondary shaping station (106), wherein output units from said primary shaping stations are input units for said at least one secondary shaping station, said secondary shaping station operable to re-shape articles in said intermediate molded shape into a final molded shape.

12. The method of any one of claims 10 to 11, comprising concurrently producing plastic articles of a plurality of types.

13. The method of any one of claims 10 to 12, comprising tracking an operating state of each one of said plurality of process stations according to a station state model (302), wherein a set of possible operating conditions are associated with each state of said station state model.

14. The method of claim 13, comprising tracking a production status of a plurality of types of plastic articles according to corresponding job state models (304).

15. The method of claim 14, comprising causing a transition between states of said station state model (302) based on a transition between states of a job state model (304).

## Patentansprüche

1. Formungssystem (100) zum Formen von Kunststoffartikeln, wobei das System Folgendes umfasst:
eine Vielzahl von Prozessstationen, die jeweils so betrieben werden können, dass sie eine Eingangseinheit aufnehmen und eine Ausgangseinheit erzeugen, wobei die Prozessstationen Folgendes umfassen:
mindestens eine Schmelzeabgabestation (102) zum Abgeben von geschmolzenem Formmaterial; und
eine Vielzahl von Formgebungsstationen, die jeweils zum Formen von Formmaterial in eine geformte Form dienen;
wobei Ausgabeeinheiten von der mindestens einen Schmelzeabgabestation Eingabeeinheiten für die Formgebungsstationen sind;
ein Transportsystem (100) zum selektiven Bewegen von Eingabe- und Ausgabeeinheiten zwischen einzelnen der Prozessstationen;
**dadurch gekennzeichnet, dass** das Formungssystem umfasst:
einen Controller (207) für jede der Prozessstationen, der die jeweiligen Prozessstationen gemäß einer Vielzahl von Betriebsbedingungen betreibt, wobei die Betriebsbedingungen die Stationen als bereit zum Empfangen einer Eingabeeinheit, zum Durchführen eines Prozesses an einer Eingabeeinheit oder als bereit zum Freigeben einer Ausgabeeinheit definieren;
eine Überwachungssteuerung (204), die für Folgendes betrieben werden kann: Verfolgen eines aktuellen Betriebszustands jeder Prozessstation, Definieren von Pfaden von denjenigen Prozessstationen, die bereit sind, eine Ausgabeeinheit freizugeben, und von denjenigen Prozessstationen, die bereit sind, eine Eingabeeinheit zu empfangen, und Bereitstellen von Anweisungen für das Transportsystem (110), um die Eingabe- und Ausgabeeinheiten entlang der Pfade zu bewegen.

2. Formungssystem nach Anspruch 1, wobei die Vielzahl von Formgebungsstationen Primärformgebungsstationen (104) sind und die geformte Form eine geformte Zwischenform ist und die Prozessstationen ferner mindestens eine Sekundärformgebungsstation (106) umfassen, wobei Ausgabeeinheiten von den Primärformgebungsstationen Eingabeeinheiten für die mindestens eine Sekundärformgebungsstation sind, wobei die Sekundärformgebungsstation so betrieben werden kann, dass sie Artikel in der geformten Zwischenform in eine endgültige geformte Form umformt.

3. Formungssystem nach Anspruch 2, wobei die Vielzahl von primären Formgebungsstationen (104) Spritzgussformen und die Vielzahl von sekundären Formgebungsstationen (106) Blasformen umfassen.

4. Formungssystem nach Anspruch 1 oder 2, wobei das Formungssystem so betrieben werden kann, dass gleichzeitig Kunststoffartikel einer Vielzahl von Typen hergestellt werden.

5. Formungssystem nach Anspruch 4, wobei die Betriebsbedingungen mit einem Zustand eines Stationszustandsmodells (302) verknüpft sind.

6. Formungssystem nach Anspruch 5, wobei die Überwachungssteuerung (204) so konfiguriert ist, dass sie jedem von mehreren Typen von Kunststoffartikeln gemäß einem Auftragszustandsmodell einen Betriebszustand zuweist.

7. Formungssystem nach Anspruch 5, wobei die Überwachungssteuerung (204) so konfiguriert ist, dass sie die Betriebsstationen veranlasst, zwischen Zuständen des Stationszustandsmodells (302) basierend auf einem Übergang zwischen Zuständen eines Auftragszustandsmodells (304) zu wechseln.

8. Formungssystem nach einem der Ansprüche 5 bis 7, wobei jedes Zustandsmodell (302, 304) mit einem Produktionsbetriebsmodus verknüpft ist und wobei der Controller (207) und die Überwachungssteuerung (204) mit weiteren Zustandsmodellen zur automatischen Ausführung zusätzlicher Betriebsmodi konfiguriert sind.

9. Formungssystem nach einem der Ansprüche 1 bis 8, das ferner eine Unternehmenssteuerungsplattform umfasst, wobei die Unternehmenssteuerungsplattform so betrieben werden kann, dass sie Produktionsanweisungen über das Internet empfängt und den Betrieb der Überwachungssteuerung gemäß den Produktionsanweisungen steuert.

10. Verfahren zum Formen von Kunststoffartikeln, das umfasst:
Betreiben einer Vielzahl von Prozessstationen, die Stationen zum Ausgeben von geschmolzenem Formmaterial (102) und Stationen zum Formen von Formmaterial in eine geformte Form umfassen, wobei das Betreiben umfasst: Bereitstellen von Betriebszustands-Kommunikationen von einem Controller (207), wobei die Kommunikationen jeweilige der Stationen als ein Ausgangsteil produzierend identifizieren, und jeweilige der Stationen als bereit identifizieren, ein zu verarbeitendes Eingangsteil zu empfangen;
Verfolgen eines Betriebszustands jeder der mehreren Bearbeitungsstationen basierend auf den Kommunikationen;
Definieren eines Pfades für jedes Ausgangsteil zu einer Station, die bereit ist, das jeweilige zu bearbeitende Eingangsteil zu empfangen; und
Bewegen jedes Teils entlang seiner jeweiligen Route.

11. Verfahren nach Anspruch 10, wobei die Vielzahl von Formgebungsstationen Primärformgebungsstationen (104) sind und die geformte Form eine geformte Zwischenform ist und die Prozessstationen ferner mindestens eine Sekundärformgebungsstation (106) umfassen, wobei Ausgabeeinheiten von den Primärformgebungsstationen Eingabeeinheiten für die mindestens eine Sekundärformgebungsstation sind, wobei die Sekundärformgebungsstation so betrieben werden kann, dass sie Artikel in der geformten Zwischenform in eine endgültige geformte Form umformt.

12. Verfahren nach einem der Ansprüche 10 bis 11, das das gleichzeitige Herstellen von Kunststoffartikeln einer Vielzahl von Typen umfasst.

13. Verfahren nach einem der Ansprüche 10 bis 12, das das Verfolgen eines Betriebszustands jeder der Vielzahl von Prozessstationen gemäß einem Stationszustandsmodell (302) umfasst, wobei jedem Zustand des Stationszustandsmodells ein Satz möglicher Betriebsbedingungen zugeordnet ist.

14. Verfahren nach Anspruch 13, das das Verfolgen eines Produktionszustands einer Vielzahl von Arten von Kunststoffartikeln gemäß entsprechenden Auftragszustandsmodellen (304) umfasst.

15. Verfahren nach Anspruch 14, das das Veranlassen eines Übergangs zwischen Zuständen des Stationszustandsmodells (302) basierend auf einem Übergang zwischen Zuständen eines Auftragszustandsmodells (304) umfasst.

## Revendications

1. Système de moulage (100) pour former des articles en plastique, le système comprenant :
une pluralité de postes de traitement chacun pouvant être mis en fonctionnement pour recevoir une unité d'entrée et produire une unité de sortie, les postes de traitement comprenant :
au moins un poste de distribution de matériau fondu (102) destiné à distribuer un matériau de moulage fondu ; et
une pluralité de postes de mise en forme chacun destiné à former un matériau de moulage en une forme moulée ;
dans lequel des unités de sortie provenant dudit au moins un poste de distribution de matériau fondu sont des unités d'entrée pour lesdits postes de mise en forme,
un système de transport (100) destiné à déplacer sélectivement des unités d'entrée et de sortie entre des postes desdits postes de traitement ;
**caractérisé en ce que** le système de moulage comprend :
une unité de commande (207) pour chacun desdits postes de traitement, mettant en fonctionnement les postes de traitement respectifs selon une pluralité de conditions de fonctionnement, les conditions de fonctionnement définissant les postes comme étant prêts à recevoir une unité d'entrée, réalisant un traitement sur une unité d'entrée, ou prêts à libérer une unité de sortie ;
une unité de commande de surveillance (204) pouvant être mise en fonctionnement pour suivre une condition de fonctionnement actuelle de chaque poste de traitement, définir des chemins depuis des postes desdits postes de traitement prêts à libérer une unité de sortie, et des postes desdits postes de traitement prêts à recevoir une unité d'entrée, et fournir des instructions pour ledit système de transport (110) pour déplacer lesdites unités d'entrée et de sortie le long desdits chemins.

2. Système de moulage de la revendication 1, dans lequel ladite pluralité de postes de mise en forme sont des postes de mise en forme primaires (104), et ladite forme moulée est une forme moulée intermédiaire et lesdits postes de traitement comprennent en outre au moins un poste de mise en forme secondaire (106), dans lequel des unités de sortie provenant desdits postes de mise en forme primaires sont des unités d'entrée pour ledit au moins un poste de mise en forme secondaire, ledit poste de mise en forme secondaire pouvant être mis en fonctionnement pour remettre en forme des articles dans ladite forme moulée intermédiaire en une forme moulée finale.

3. Système de moulage de la revendication 2, dans lequel ladite pluralité de postes de mise en forme primaires (104) comprennent des moules à injection et ladite pluralité de postes de mise en forme secondaires (106) comprennent des moules à soufflage.

4. Système de moulage de la revendication 1 ou la revendication 2, dans lequel ledit système de moulage peut être mis en fonctionnement pour produire simultanément des articles en plastique d'une pluralité de types.

5. Système de moulage de la revendication 4, dans lequel lesdites conditions de fonctionnement sont associées à un état d'un modèle d'état de poste (302).

6. Système de moulage de la revendication 5, dans lequel ladite unité de commande de surveillance (204) est configurée pour attribuer un état de fonctionnement à chacun d'une pluralité de types d'articles en plastique, selon un modèle d'état de travail.

7. Système de moulage de la revendication 5, dans lequel ladite unité de commande de surveillance (204) est configurée pour entraîner la transition desdits postes de fonctionnement entre des états dudit modèle d'état de poste (302) sur la base d'une transition entre des états d'un modèle d'état de travail (304).

8. Système de moulage de l'une quelconque des revendications 5 à 7, dans lequel chaque dit modèle d'état (302, 304) est associé à un mode de fonctionnement de production, et dans lequel ladite unité de commande (207) et ladite unité de commande de surveillance (204) sont configurées avec des modèles d'état supplémentaires pour l'exécution automatisée de modes de fonctionnement supplémentaires.

9. Système de moulage de l'une quelconque des revendications 1 à 8, comprenant en outre une plate-forme de commande d'entreprise, ladite plate-forme de commande d'entreprise pouvant être mise en fonctionnement pour recevoir des instructions de production par l'intermédiaire d'Internet et pour diriger un fonctionnement de ladite unité de commande de surveillance conformément auxdites instructions de production.

10. Procédé de formage d'articles en plastique, comprenant les faits de :
mettre en fonctionnement une pluralité de postes de traitement comprenant des postes destinés à distribuer un matériau de moulage fondu (102) et des postes destinés à former un matériau de moulage en une forme moulée, dans lequel ledit fait de mettre en fonctionnement comprend le fait de fournir des communications de statut de fonctionnement en provenance d'une unité de commande (207), lesdites communications identifiant des postes respectifs desdits postes comme ayant produite une pièce de sortie, et des postes desdits postes comme étant prêts à recevoir une pièce d'entrée destinée à être traitée ;
suivre une condition de fonctionnement de chacun de ladite pluralité de postes de traitement sur la base desdites communications ;
définir un chemin pour chaque pièce de sortie jusqu'à un poste prêt à recevoir la pièce d'entrée respective destinée à être traitée ; et
déplacer chaque pièce le long de son itinéraire respectif.

11. Procédé de la revendication 10, dans lequel ladite pluralité de postes de mise en forme sont des postes de mise en forme primaires (104), et ladite forme moulée est une forme moulée intermédiaire et lesdits postes de traitement comprennent en outre au moins un poste de mise en forme secondaire (106), dans lequel des unités de sortie provenant desdits postes de mise en forme primaires sont des unités d'entrée pour ledit au moins un poste de mise en forme secondaire, ledit poste de mise en forme secondaire pouvant être mis en fonctionnement pour remettre en forme des articles dans ladite forme moulée intermédiaire en une forme moulée finale.

12. Procédé de l'une quelconque des revendications 10 et 11, comprenant le fait de produire simultanément des articles en plastique d'une pluralité de types.

13. Procédé de l'une quelconque des revendications 10 à 12, comprenant le fait de suivre un état de fonctionnement de chacune de ladite pluralité de postes de traitement selon un modèle d'état de poste (302), dans lequel un ensemble d'éventuelles conditions de fonctionnement sont associées à chaque état dudit modèle d'état de poste.

14. Procédé de la revendication 13, comprenant le fait de suivre un statut de production d'une pluralité de types d'articles en plastique selon des modèles d'état de travail correspondants (304).

15. Procédé de la revendication 14, comprenant le fait d'entraîner une transition entre des états dudit modèle d'état de poste (302) sur la base d'une transition entre des états d'un modèle d'état de travail (304).
